Europäisches Patentamt

European Patent Office

Office européen des brevets

(19)

(11) Veröffentlichungsnummer: **0 301 305**
**A2**

(12) **EUROPÄISCHE PATENTANMELDUNG**

(21) Anmeldenummer: **88111096.9**

(22) Anmeldetag: **12.07.88**

(51) Int. Cl.4: **C02F 3/10**

(30) Priorität: **31.07.87 DE 3725432**

(43) Veröffentlichungstag der Anmeldung:
**01.02.89 Patentblatt 89/05**

(84) Benannte Vertragsstaaten:
**AT BE CH DE FR IT LI NL SE**

(71) Anmelder: **Linde Aktiengesellschaft**
**Abraham-Lincoln-Strasse 21**
**D-6200 Wiesbaden(DE)**

(72) Erfinder: **Meyer, Klaus-Dieter, Dipl.-Ing.**
**Enzianstrasse 38**
**D-8190 Wolfratshausen(DE)**
Erfinder: **Reimann, Hans, Dr. rer. nat.**
**Rudolf-Wilke-Weg 21**
**D-8000 München 71(DE)**

(74) Vertreter: **Schaefer, Gerhard, Dr.**
**Linde Aktiengesellschaft Zentrale**
**Patentabteilung**
**D-8023 Höllriegelskreuth(DE)**

(54) **Trägermaterial als Aufwuchsfläche.**

(57) Die Erfindung betrifft ein Trägermaterial als Aufwuchsfläche für Biomasse in Form einer Platte oder Bahn. Derartige Trägermaterialien werden z.B. bei biologischen Abwasserreinigungsanlagen zur Erhöhung der Reinigungsleistung verwendet. Sie weisen jedoch, insbesondere bei Verwendung von Schaumstoffmaterial, nur eine geringe mechanische Stabilität auf. Die Erfindung bietet dagegen ein Trägermaterial in Form einer Platte oder Bahn mit hoher mechanischer Stabilität. Dies wird dadurch erreicht, daß zwischen mindestens zwei Schaumstoffplatten bzw. -bahnen eine zugfeste Trägerplatte bzw. -bahn angeordnet ist.

EP 0 301 305 A2

## Trägermaterial als Aufwuchsfläche für Biomasse

Die Erfindung betrifft ein Trägermaterial als Aufwuchsfläche für Biomasse in Form einer Platte oder Bahn.

Bei biologischen Verfahren zur Abwasser- oder Abgasreinigung wird heute in zunehmendem Maße auf eine sogenannte trägergebundene Biologie gesetzt. Dabei werden verschiedenste Trägermaterialien als Aufwuchsflächen für Mikroorganismen verwendet. Als besonders vorteilhaft haben sich Trägermaterialien aus makroporösem Stoff, z.B. Polyurethanschaumstoff, erwiesen, da diese den Mikroorganismen eine große aktive Oberfläche zur Ansiedlung bieten, auf der sie sich gleichmäßig verteilen können. Durch die Makroporen des Trägermaterials werden dabei die Mikroorganismen zu einem dezentralisierten Wachstum gezwungen, wodurch sich eine große Stoffaustauschfläche für Reaktionen zwischen den Mikroorganismen und den Abwasser- bzw. Abgasinhaltsstoffen ergibt.

Es sind im wesentlichen zwei Methoden zur Anwendung trägergebundener Biologie bei der Abwasser- oder Abgasreinigung bekannt. Einerseits werden Trägerteilchen in stückiger Form (z.B. Würfel) freischwebend in Abwasserbehandlungsbecken eingebracht oder als Feststoffschüttung in einem Reaktor angeordnet. Das zu behandelnde Abwasser oder Abgas wird durch das Behandlungsbecken oder den Reaktor geleitet. Andererseits werden die Trägermaterialien in Form von Platten oder Bahnen im Behandlungsbecken oder Reaktor fest angeordnet. Die letztere Methode weist den Vorteil auf, daß keine Rückhaltemechanismen vorgesehen werden müssen, um einen unerwünschten Austrag der Trägerteilchen aus dem Behandlungsbecken bzw. Reaktor zu verhindern. Außerdem muß nicht durch Energieeintrag eine Gleichverteilung der Trägerteilchen aufrechterhalten werden, wie dies bei der Einbringung von freischwebenden Trägerteilchen in Abwasserbehandlungsbecken der Fall ist.

Herkömmliche fest in Behandlungsbecken oder Reaktoren eingebaute Trägermaterialien in Form von Platten oder Bahnen weisen jedoch eine geringe mechanische Festigkeit auf. Dies gilt umso mehr für aus Schaumstoffmaterial gefertigte Trägermaterialplatten bzw. - bahnen, deren makroporöse Struktur zwar eine hohe Reinigungsleistung verspricht, zugleich jedoch die Stabilität herabsetzt. So können herkömmliche Schaumstoffplatten z.B. den in Abwasserbehandlungsbecken auftretenden hydraulischen Belastungen oft nicht standhalten. Besonders empfindlich sind die üblichen Trägermaterialplatten bzw. -bahnen auf Zugbelastungen.

Der vorliegenden Erfindung liegt daher die Aufgabe zugrunde, ein Trägermaterial in Form einer Platte oder Bahn bereitzustellen, das eine hohe mechanische Festigkeit aufweist.

Diese Aufgabe wird erfindungsgemäß dadurch gelöst, daß auf mindestens einer Schaumstoffbahn oder -platte mindestens eine zugfeste Trägerbahn oder -platte aufgebracht ist.

Die Erfindung bietet somit einerseits den mit der Verwendung von Schaumstoffbahnen oder -platten als Aufwuchsfläche für Biomasse verbundenen Vorteil einer hohen Reinigungsleistung, weist andererseits jedoch nicht den üblicherweise damit verbundenen Nachteil geringer mechanischer Stabilität auf.

Bevorzugterweise wird mindestens eine Schaumstoffbahn bzw. -platte zwischen mindestens zwei Trägerbahnen oder -platten angeordnet. Eine andere Möglichkeit besteht darin, die Trägerbahn bzw. -platte zwischen mindestens zwei Schaumstoffbahnen oder -platten anzuordnen.

Zweckmäßigerweise werden die Schaumstoffbahnen bzw. -platten und die Trägerbahn bzw. -platte miteinander verklebt oder verschweißt. Bei Verwendung von zwei Schaumstoffbahnen bzw. -platten zum Aufbau eines erfindungsgemäßen Trägermaterials werden die beiden Schaumstoffbahnen bzw. -platten auf die beiden Seiten der Trägerbahn bzw. -platte aufgeklebt oder aufgeschweißt. So entsteht ein in "Sandwich"-Bauweise hergestelltes mechanisch hochbelastbares Trägermaterial als Aufwuchsfläche für Biomasse.

In einer bevorzugten Ausführungsform der Erfindung besteht die Trägerbahn bzw. -platte aus ein bis zwei Lagen eines Netzes. Dadurch wird eine Durchlässigkeit des Trägermaterials für Abwasser bzw. Abgas gewährleistet. Zweckmäßigerweise ist dieses Netz aus Kunststofffäden oder -schnüren, z.B. aus Gfk oder ähnlichen Kunststoffen, aufgebaut.

Vorteilhafterweise steht die Trägerbahn bzw. -platte mindestens an einer Seite über die Schaumstoffbahn bzw. -platte hinaus, um eine Befestigungsmöglichkeit für das Trägermaterial zu bieten. In einer zweckmäßigen Ausführungsform der Erfindung sind hierzu auf dem überstehenden Teil bzw. den überstehenden Teilen der Trägerbahn bzw. -platte beidseitig gelochte Befestigungsplatten angebracht. Damit erhält man eine Trägermaterialplatte bzw. -bahn, die an ein bis vier Seiten in eine Tragkonstruktion eingespannt werden kann. Eine andere Befestigungsmöglichkeit besteht darin, an dem überstehenden Teil bzw. den überstehenden Teilen der Trägerbahn bzw. -platte Laschen anzubringen, an denen die Trägermaterialplatte bzw. -bahn aufgehängt werden kann.

Eine bevorzugte Ausführungsform der Erfindung sieht vor, daß die Schaumstoffbahn bzw. -

platte aus makroporösem Material besteht. Derartige Materialien sind beispielsweise in der EP-PS 46 900 oder der DE-PS 28 45 552 beschrieben. Dadurch wird eine besonders hohe Reinigungsleistung beim Einsatz des erfindungsgemäßen Trägermaterials in Abwasser- bzw. Abgasreinigungsanlagen erreicht. Dabei ist eine für Abwasser bzw Abgas durchlässige Ausgestaltung des Trägermaterials durch gleichzeitige Verwendung eines Netzes als Trägerbahn bzw. -platte und von durchlässigem Schaumstoffmaterial besonders vorteilhaft. Die Schaumstoffbahnen bzw. -platten weisen zweckmäßigerweise eine Dicke von ca. 5 bis 20 mm auf.

Das erfindungsgemäße Trägermaterial kann generell bei allen biotechnologischen Verfahren, bei denen trägergebundene Biomasse zum Einsatz kommt, angewendet werden. Es eignet sich speziell für Abwasserreinigungsanlagen, deren Reinigungsleistung durch die Verwendung trägergebundener Biomasse erhöht werden soll. Dabei wird das erfindungsgemäße Trägermaterial z.B. in einem Belebungsbecken quer oder längs zur Strömungsrichtung des Abwassers installiert. In der Regel werden selbstverständlich mehrere solcher Trägermaterialien im Belebungsbecken in nach strömungstechnischen Gesichtspunkten günstiger Weise angeordnet.

Es ist außerdem vorgesehen, das erfindungsgemäße Trägermaterial als Tropfkörpermaterial bei Abwasserreinigungsanlagen zu verwenden.

Bei für Abwasser oder Abgas durchlässiger Ausgestaltung des erfindungsgemäßen Trägermaterials kommt auch eine Verwendung als Filtermatte zur Wasser- oder Abwasserfiltration bzw. Abgas-oder Luftfiltration in Betracht.

Nachfolgend wird die Erfindung anhand eines in einer Zeichnung schematisch dargestellten Ausführungsbeispiels näher erläutert.

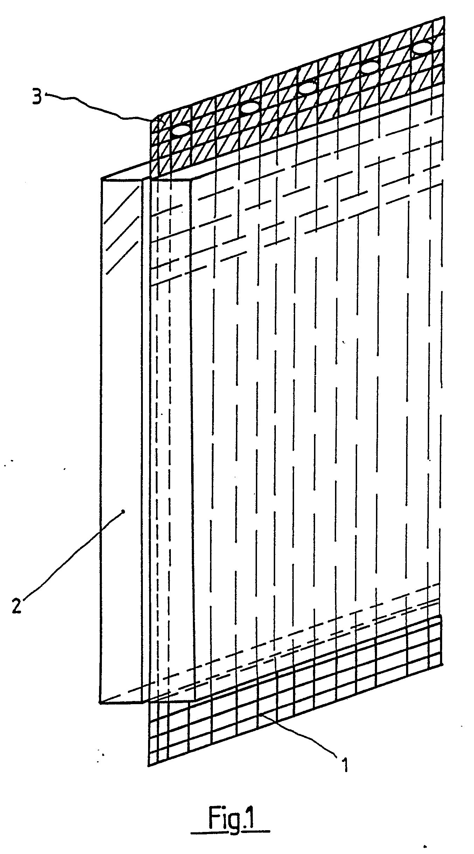

Die Figur zeigt eine perspektivische Darstellung einer erfindungsgemäßen Trägermaterialplatte.

Auf eine zugfeste Trägerplatte 1, die als Netz aus GfK-Kunststofffäden ausgebildet ist, ist beidseitig je eine Schaumstoffplatte 2 von 10 mm Dicke aufgeklebt. Die Schaumstoffplatte 2 besteht aus Polyurethanschaum mit offenen Makroporen von ca. 1 mm Durchmesser. Die derart in "Sandwich"- Bauweise aufgebaute Trägermaterialplatte ist ca. 2 -5 m breit und ca. 2 - 5 m hoch. Am oberen und unteren Ende der Platte steht die Trägerplatte 1 jeweils ca. 5 - 10 cm über die Schaumstoffplatten 2 hinaus. An den überstehenden Teilen der Trägerplatte 1 sind beidseitig der Trägerplatte 1 gelochte Befestigungsbleche 3 angebracht, die eine Fixierung des Trägermaterials in einem nichtdargestellten Traggerüst erlauben. Mit Hilfe dieses Traggerüstes werden mehrere der erfindungsgemäßen Trägermaterialplatten in einem Belebungsbecken einer Abwasserreinigungsanlage längs zur Strömungsrichtung des Abwasser angeordnet.

## Ansprüche

1. Trägermaterial als Aufwuchsfläche für Biomasse in Form einer Platte oder Bahn, dadurch gekennzeichnet, daß auf mindestens einer Schaumstoffbahn oder -platte (2) mindestens eine zugfeste Trägerbahn oder -platte (1) aufgebracht ist.

2. Trägermaterial nach Anspruch 1, dadurch gekennzeichnet, daß die Schaumstoffbahn oder -platte (2) zwischen mindestens zwei Trägerbahnen oder -platten (1) angeordnet ist.

3. Trägermaterial nach Anspruch 1, dadurch gekennzeichnet, daß die Trägerbahn oder -platte (1) zwischen mindestens zwei Schaumstoffbahnen oder -platten (2) angeordnet ist.

4. Trägermaterial nach einem der Ansprüche 1 bis 3, dadurch gekennzeichnet, daß die Schaumstoffbahn bzw. -platte (2) und die Trägerbahn bzw. -platte (1) aneinander geklebt oder geschweißt sind.

5. Trägermaterial nach einem der Ansprüche 1 bis 4, dadurch gekennzeichnet, daß die Trägerbahn bzw. -platte (1) aus ein bis zwei Lagen eines Netzes besteht.

6. Trägermaterial nach Anspruch 5, dadurch gekennzeichnet, daß das Netz aus Kunststofffäden bzw. -schnüren aufgebaut ist.

7. Trägermaterial nach einem der Ansprüche 1 bis 6, dadurch gekennzeichnet, daß die Trägerbahn bzw. -platte (1) mindestens an einer Seite über die Schaumstoffbahn bzw. -platte (2) hinaussteht.

8. Trägermaterial nach Anspruch 7, dadurch gekennzeichnet, daß auf dem überstehenden Teil oder den überstehenden Teilen der Trägerbahn bzw. -platte (1) gelochte Befestigungsplatten (3) angebracht sind.

9. Trägermaterial nach einem der Ansprüche 1 bis 8, dadurch gekennzeichnet, daß die Schaumstoffbahn bzw. -platte (2) aus makroporösem Material besteht.

10. Trägermaterial nach einem der Ansprüche 1 bis 9, dadurch gekennzeichnet, daß das Trägermaterial für Abwasser und/oder Abgas durchlässig ist.

Fig.1